# EUROPÄISCHE PATENTSCHRIFT

(11) **EP 1 529 630 B1**
(45) Veröffentlichungstag und Bekanntmachung des Hinweises auf die Patenterteilung: **03.09.2008**
(21) Anmeldenummer: 04105454.5
(22) Anmeldetag: 02.11.2004
(51) Int. Cl.: B32B 5/02, B32B 5/26, B32B 29/02, E04F 13/16

(54) **Multifunktionaler Wandbelag**
Multifunctional wall covering
Revêtement de mur multifonctionnel

(30) Priorität: 05.11.2003 DE 10352189
(43) Veröffentlichungstag der Anmeldung: 11.05.2005
(73) Patentinhaber: A.S. Création Tapeten AG, 51645 Gummersbach (DE)
(72) Erfinder: Kämper, Jörn, 51674, Wiehl (DE); Zielinski, Karl Heinz, 51702, Bergneustadt (DE)
(74) Vertreter: Jönsson, Hans-Peter

(56) Entgegenhaltungen:
- DE-A1- 2 644 090
- DE-U1- 9 417 079
- FR-A- 2 229 543
- FR-A- 2 386 660
- GB-A- 1 185 374
- GB-A- 1 533 143
- GB-A- 2 125 333

## Beschreibung

Die Erfindung betrifft eine Wandbekleidung enthaltend eine Trägerschicht und eine damit in Kontakt befindliche dreidimensionale Oberschicht, ein Verfahren zu ihrer Herstellung sowie ihre Verwendung.

Im Stand der Technik sind bereits Wandbeläge mit dreidimensionaler Oberfläche bekannt. Diese Wandbeläge weisen jedoch in Bezug auf Reliefwirkung, Dreidimensionalität und insbesondere auf Transparenz und die Möglichkeiten der kreativen Gestaltung Einschränkungen auf. Insbesondere gibt es im Stand der Technik keine Wandbekleidung mit einer Optik, die den besonderen Ansprüchen eines Objektwandbelages genügt, wie beispielsweise Schallabsorption, Stoßfestigkeit und Schadstoffabsorption.

FR-A-2229543, DE-A-2644090, DE-U-9417079, FR-A-2386660, GB-A-1533143, GB-A-2125333 und GB-A-1185374 offenbaren Wandbeläge enthaltend eine Trägerschicht und eine transparente dreidimensionale textile Oberschicht aus einem Flachgewebe oder Flachgewirke.

Aufgabe der vorliegenden Erfindung ist daher, eine Wandbekleidung bereitzustellen, die die genannten Nachteile des Standes der Technik überwindet und den bekannten Lösungen neue Vorteile hinzufügt.

Die Aufgabe wird erfindungsgemäß gelöst durch eine Wandbekleidung enthaltend eine Trägerschicht und eine damit in Kontakt befindliche dreidimensionale textile Oberschicht, dadurch gekennzeichnet, dass die dreidimensionale textile, im wesentlichen transparente Oberschicht aus einem oder mehreren Flachgeweben, Flachgewirken, Abstandsgeweben und/oder Abstandsgewirken besteht.

Dies ist eine völlig neue Art der Wandbekleidung. Bevorzugt besteht die rückseitige Trägerschicht im wesentlichen aus Vlies und/oder Papier sowie einer darauf aufkaschierten dreidimensionalen Oberschicht.

Für die rückseitige Trägerschicht werden bevorzugt bereits heute in der Tapetenbranche übliche Rohmaterialien verwendet. Dabei kann es sich zum einen um einen Vliesträger (marktübliches Tapetenvlies) und/oder aber um einen Papierträger (marktübliche Tapetenpapiere) handeln. Die rückwärtige Trägerschicht aus Vlies oder Papier erlaubt beispielsweise, den neuen multifunktionalen Wandbelag wie eine Tapete auf die Wand aufzubringen.

Das Trägermaterial und/oder eine aufgebrachte Beschichtung auf die transparente Unterseite der Oberschicht können gestaltet sein. Farben, Muster, Folien (z.B. Hologrammfolien, irisierende Folien) können aufgebracht werden. Dieser Effekt betont die Dreidimensionalität und hebt den Reiz der Transparenz.

Neu ist insbesondere die Kombination der Trägerschicht mit einer dreidimensionalen textilen Oberschicht. Die dreidimensionale textile Oberschicht besteht aus einem Abstandgewebe oder -gewirke oder aus Kombinationen hieraus. Die Gewebe oder Gewirke bestehen bevorzugt teilweise aus monofilen Filamenten, was eine gewisse Transparenz erzeugt. Dadurch ergibt sich die Möglichkeit, das Trägermaterial mit unterschiedlichen optischen Effekten zu versehen (durch z.B. Bedrucken oder Beschichten), die durch das (z.T.) transparente Gewebe bzw. Gewirke sichtbar werden.

In Abstandsgeweben wird das Obergewebe mustermässig unterbrochen. Die Abstandsfäden aus Monofil erlauben ebenfalls den Durchblick auf die Unterkonstruktion, in diesem Fall bei gleichzeitiger Dimensionsstabilität. In Abstandsgewirken wird das Obergewirk ebenfalls mustermässig unterbrochen. Der Materialeinsatz erlaubt auch hier den Durchblick auf darunter liegende Konstruktionsschichten. Die oberen Ketten können ebenfalls transparent sein.

Gegenstand der Erfindung ist des weiteren ein Verfahren zur Herstellung einer erfindungsgemäßen Wandbekleidung, das dadurch gekennzeichnet ist, dass man eine dreidimensionale Oberschicht auf eine rückseitige Trägerschicht aufkaschiert.

Eine erfindungsgemäße Wandbekleidung kann bevorzugt Verwendung finden zur Dekoration, Schallabsorption, Schallreduktion, Schallreflexion Geruchsmilderung, Schadstoffabsorption, zum Flammschutz, Schockund Stoßabsorption und/oder zur Steigerung der Wandhygiene.

Je nach Konstruktion ist eine Verarbeitung des fertigen Produkts als Rolle oder aber als Fliese möglich.

Unterscheiden lassen sich optische und physikalisch chemische Eigenschaften sowohl des Trägermaterials, als auch der Oberschicht.

Als optische Eigenschaften der Konstruktion sind aufzuführen:
- Dreidimensionalität
- Reliefwirkung
- Transparenz
- Visualisierung des Trägermaterials bzw. der Unterseite der Oberschicht

Diese Effekte werden durch die Besonderheit der Kombination zwischen Material, Konstruktion der Oberschicht und der Unterschicht erzielt. Durch den Einsatz monofiler Filamente in der Oberschicht wird eine stabile Dreidimensionalität bei gleichzeitiger Transparenz erreicht.

Bevorzugt beträgt die Dicke der Wandbekleidung 1 bis 25, besonders bevorzugt 1,5 bis 20 mm. Die rückseitige Trägerschicht hat bevorzugt eine Dicke im Bereich von 0,05 bis 2,5 besonders bevorzugt 0,1 bis 1 mm.

Die erfindungsgemäße Wandbekleidung erzielt je nach Ausrüstung der verwendeten Materialien hervorragende Werte in Bezug auf:
- Schallabsorbtion
- Geruchsmilderung
- Schadstoffabsorbtion
- Feuerhemmende Ausrüstung
- Antibakterielle Ausrüstung
- Abwaschbarkeit
- Stoßfestigkeit

Diese Eigenschaften liegen in der Ausrüstung und in der Konstruktion begründet. Die Trägerschicht sowie die Unterseite der Oberschicht oder die Oberschicht als Ganzes können dabei spezifisch ausgerüstet sein. Aufgrund ihrer dreidimensionalen Konstruktion sowie ihrer Materialzusammensetzung werden diese Eigenschaften erzielt.

Die Besonderheit und die Innovation eines solchen Wandbelages liegt also in der Kombination aus besonderer physikalisch chemischer Eigenschaften, Dreidimensionalität und Transparenz.

## Patentansprüche

1. Wandbekleidung **mit einer** Trägerschicht und einer damit in Kontakt befindlichen dreidimensionalen textilen transparenten Oberschicht, **dadurch gekennzeichnet, dass** die Oberschicht aus einem oder mehreren Abstandsgewebe und/oder Abstandsgewirke enthaltend monofile Filamente besteht.

2. Wandbekleidung gemäß Patentanspruch 1, **dadurch gekennzeichnet, dass** die rückseitige Trägerschicht aus Vlies und/oder Papier besteht.

3. Verfahren zur Herstellung einer Wandbekleidung gemäß einem der Ansprüche 1 **oder** 2, **dadurch gekennzeichnet, dass** man die Oberschicht auf die Trägerschicht aufkaschiert.

4. Verwendung einer Wandbekleidung gemäß einem der Patentansprüche 1 oder 2 zur Dekoration, Schallabsorption, Schallreduktion, Schallreflexion, Geruchsmilderung, Schadstoffabsorption, zum Flammschutz, Schock- und Stoßabsorption und/oder zur Steigerung der Wandhygiene.

## Claims

1. A wall covering comprising a support layer and, in contact therewith, a three-dimensional transparent textile cover layer, **characterized in that** said cover layer consists of one or more spaced woven fabrics and/or spaced knitted fabrics containing monofilaments.

2. The wall covering according to claim 1, **characterized in that** the backside support layer consists of a non-woven fabric and/or paper.

3. A process for preparing a wall covering according to either of claims 1 or 2, **characterized in that** said cover layer is bonded onto said support layer.

4. Use of a wall covering according to either of claims 1 or 2 for decoration, sound absorption, sound reduction, sound reflection, odor reduction, pollutant absorption, flame retarding, shock absorption and/or increasing the wall hygiene.

## Revendications

1. Revêtement de mur comprenant une couche de support et, en contacte avec celle-ci, une couche supérieure textile tridimensionnelle transparente, **caractérisé en ce que** ladite couche supérieure consiste en un ou plusieurs tissus ventilés et/ou tricots ventilés contenant des monofilaments.

2. Revêtement de mur selon la revendication 1, **caractérisé en ce que** ladite couche de support du coté arrière consiste en non-tissé et/ou papier.

3. Procédé pour la préparation d'un revêtement de mur selon l'une quelconque des revendications 1 ou 2, **caractérisé en ce que** ladite couche supérieure est collée contre ladite couche de support.

4. Utilisation d'un revêtement de mur selon l'une quelconque des revendications 1 ou 2 pour décoration, absorption de bruit, réduction de bruit, réflexion de bruit, réduction d'odeur, absorption de polluants, ignifugation, absorption de choques et/ou augmentation de l'hygiène du mur.
